# EUROPEAN PATENT SPECIFICATION

(11) **EP 4 037 356 B1**
(45) Date of publication and mention of the grant of the patent: **23.04.2025**
(21) Application number: 20869729.2
(22) Date of filing: 15.09.2020
(51) Int. Cl.: H04W 4/80, H04W 4/70, H04L 12/28

(54) **INFORMATION PROCESSING METHOD AND SYSTEM, ELECTRICAL DEVICE, AND EDGE COMPUTING DEVICE**
INFORMATIONSVERARBEITUNGSVERFAHREN UND -SYSTEM, ELEKTRISCHE VORRICHTUNG UND EDGE-RECHNERVORRICHTUNG
PROCÉDÉ ET SYSTÈME DE TRAITEMENT D'INFORMATIONS, DISPOSITIF ÉLECTRIQUE ET DISPOSITIF INFORMATIQUE EN PÉRIPHÉRIE

(30) Priority: 27.09.2019 CN 201910927013
(43) Date of publication of application: 03.08.2022
(73) Proprietor: Qingdao Haier Washing Machine Co., Ltd., Qingdao, Shandong 266101 (CN); Haier Smart Home Co., Ltd., Qingdao, Shandong 266101 (CN)
(72) Inventor: WANG, Zizhen, Qingdao, Shandong 266101 (CN); HUANG, Zhenxing, Qingdao, Shandong 266101 (CN); XU, Sheng, Qingdao, Shandong 266101 (CN); LI, Yang, Qingdao, Shandong 266101 (CN)
(74) Representative: Gill Jennings & Every LLP
(86) International application number: PCT/CN2020/115281
(87) International publication number: WO 2021/057544

(56) References cited:
- WO-A1-2018/111448
- CN-A- 105 955 661
- CN-A- 109 782 636
- CN-A- 109 951 574
- JP-A- 2019 041 266
- US-A1- 2017 019 751
- US-A1- 2018 142 394

## Description

### TECHNICAL FIELD

The present application relates to the field of household appliance technology, for example, an information processing method and system, an electrical device, and an edge computing device.

### BACKGROUND

With the increasing improvement of people's living standards, an electrical device such as a washing machine, a refrigerator, or an air conditioner has gradually become one of necessary household appliances in people's homes and greatly facilitates people's daily life.

In general, when an electrical device such as a washing machine, a refrigerator, or an air conditioner is used, it is necessary to determine the operation parameter information of the electrical device according to some preset information. For example, since different types of clothing need to use different washing parameter information when the clothing are washed, it is necessary to select corresponding washing parameter information such as a washing mode and a washing procedure according to clothing information such as the material, color, type, and style of the clothing.

However, the washing parameter information needs to be determined by the user. Thus, the user may fail to select a correct washing parameter, and the selection process may be cumbersome. As a result, the user experience is poor.

WO 2018/111448 A1 discloses electronic care and content clothing label.

US 2018/142394 A1 discloses a cleaning machine automatically identifies cleaning instructions.

US 2017/019751 A1 discloses a computer-implemented method.

### SUMMARY

The present application provides an information processing method according to independent claim 1 and system according to independent claim 6, which can automatically acquire and process the information stored on an electronic tag on a preset object within the preset range of an electrical device.

### BRIEF DESCRIPTION OF DRAWINGS

FIG. 1 is a flowchart of an information processing method according to embodiment one of the present application.
FIG. 2 is a flowchart of the data processing of an edge computing device in an information processing method according to embodiment one of the present application.
FIG. 3 is a flowchart of an information processing method according to embodiment two of the present application.
FIG. 4A is a first diagram of an electrical device according to embodiment three of the present application.
FIG. 4B is a second diagram of an electrical device according to embodiment three of the present application.
FIG. 5A is a first diagram of an edge computing device according to embodiment four of the present application.
FIG. 5B is a second diagram of an edge computing device according to embodiment four of the present application.
FIG. 6A is a first architecture diagram of an information processing system according to embodiment five of the present application.
FIG. 6B is a second architecture diagram of an information processing system according to embodiment five of the present application.
FIG. 6C is a third architecture diagram of an information processing system according to embodiment five of the present application.

### DETAILED DESCRIPTION

### Embodiment one

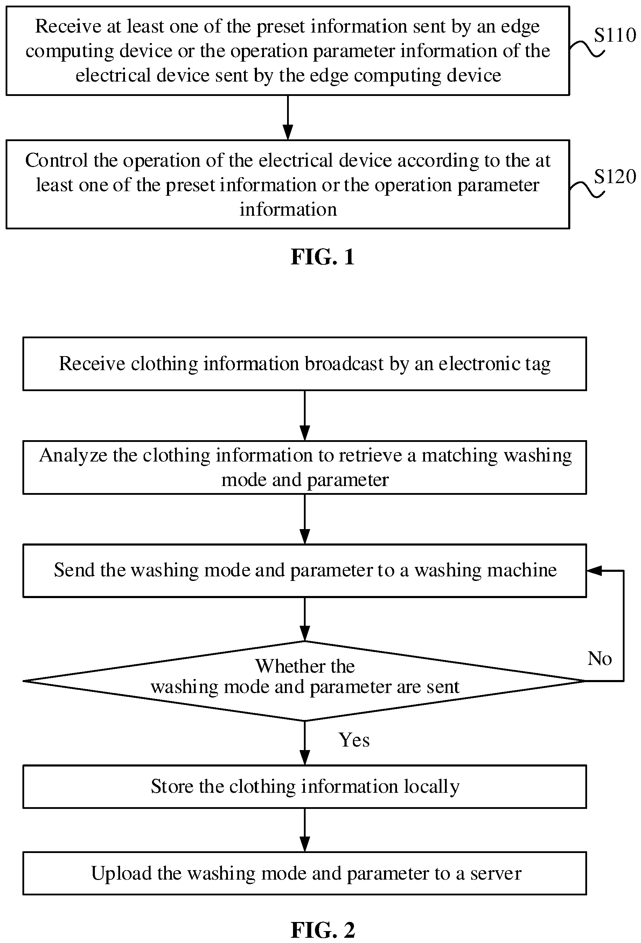

FIG. 1 is a flowchart of an information processing method according to embodiment one of the present application. The method may be executed by a control unit of an electrical device provided by this embodiment of the present application. The control unit may be performed by at least one of software or hardware.

Referring to FIG. 1, the method according to this embodiment of the present application includes the steps below.

In S110, at least one of the preset information sent by an edge computing device or the operation parameter information of the electrical device sent by the edge computing device is received. The preset information is preset information broadcast by an electronic tag on a preset object within the preset range of the electrical device. After the electronic tag broadcasts the preset information, the preset information is received by a base station and sent to the edge computing device by the base station. The operation parameter information is determined according to the preset information.

Many preset objects carry an electronic tag when the preset objects leave the factory, such as a radio-frequency identification (RFID) electronic tag. Moreover, an electronic tag may store the preset information of a preset object. For example, an electronic tag storing clothing information may be disposed on clothing. The clothing information may include at least one of the following attribute information: the material, color, type, style, weight, manufacturer, washing method, or washing precaution of the clothing. After the electronic tag on the preset object within the preset range broadcasts the preset information, the base station may receive the preset information. For example, the preset information may be received by a receiving source disposed in the base station. The receiving source may be a tag receiver of a tag reader. Then, the base station may send the preset information to the edge computing device communicatively connected to the base station.

Optionally, the edge computing device may determine the operation parameter information of the electrical device according to the received preset information and send the at least one of the preset information or the operation parameter information to the electrical device. At this time, if the electrical device does not receive the operation parameter information sent by the edge computing device, the electrical device may also determine the operation parameter information according to the received preset information. Alternatively, the edge computing device may send the preset information to a terminal device communicatively connected to the edge computing device and capable of controlling the electrical device. In this manner, the terminal device can determine the operation parameter information according to the preset information and send the operation parameter information to at least one of the electrical device or the edge computing device. Thus the terminal device can directly control the operation of the electrical device according to the operation parameter information. The preceding edge computing device may be a computer device having functions such as data processing, computing, and communication.

For example, the edge computing device needs to use the base station as an intermediate medium to communicate with at least one of a terminal device, an electrical device, or a server. Therefore, the communication capability between the base station and the edge computing device is critical. The distance between the base station and the edge computing device is shorter than the distance between the base station and the server, and even the edge computing device may be directly integrated in the base station. In this manner, the data transmission path of the preset information is shorter. Therefore, the data transmission duration is greatly shortened, and the data response speed is improved. On this basis, due to the short distance between the base station and the edge computing device, the base station may be communicatively connected to the edge computing device in a wired manner, such as a fiber connection. Wired communication can further shorten the data transmission duration, that is, shorten the data delay. Moreover, the security of the data transmission is improved, and the risk of user privacy data leakage is reduced.

Optionally, in general, all base stations are communicatively connected to one server. As a result, the data processing pressure of the server is inevitably great. Accordingly, with regard to the edge computing device, a set number of base stations may correspond to one edge computing device. For example, one base station or two base stations correspond to one edge computing device. In this manner, the data processing pressure of each edge computing device is small. Thus, the received preset information may be processed in a timely and efficient manner, and the data response speed is improved.

In S120, the operation of the electrical device is controlled according to the at least one of the preset information or the operation parameter information.

When the control unit of the electrical device receives the at least one of the preset information sent by the edge computing device or the operation parameter information of the electrical device sent by the edge computing device, the operation of the electrical device may be controlled. For example, a communication unit of the electrical device may send the at least one of the received preset information sent by the edge computing device or the received operation parameter information sent by the edge computing device to the control unit. Then, the control unit directly controls the operation of the electrical device according to the received operation parameter information. Alternatively, the control unit determines the operation parameter information according to the received preset information and controls the operation of the electrical device according to the operation parameter information.

For a better understanding of the implementation process of the preceding steps, the information processing method according to this embodiment is exemplarily described below in conjunction with several examples. In example one, if the electrical device is a washing machine, the preset object within the preset range is to-be-washed clothing in the washing machine, the preset information is clothing information, and the operation parameter information is washing parameter information, then after the electronic tag on the to-be-washed clothing broadcasts the clothing information, the clothing information may be received by the base station and sent to the edge computing device by the base station, and the edge computing device may determine the washing parameter information (such as a washing mode and parameter) of the washing machine according to the clothing information. At this time, the washing machine may receive the washing parameter information sent by the edge computing device and control the operation of the washing machine based on the washing parameter information. Thus, the to-be-washed clothing in the washing machine is washed.

In example two, if the electrical device is a refrigerator, the preset object within the preset range is food in the refrigerator, the preset information is food information (such as a food type, a production date, a shelf life, and a storage method), and the operation parameter information is the storage parameter information of the refrigerator (such as a temperature control parameter, a recipe, and an automatic order purchase), the refrigerator controls the operation of the refrigerator according to the storage parameter information of the refrigerator sent by the edge computing device. Thus, the food in the refrigerator is stored.

In example three, if the electrical device is an air conditioner, the preset object within the preset range is clothing worn by a user within a preset distance range, the preset information is clothing information (such as the material, type, and thickness of clothing), and the operation parameter information is air conditioner control parameter information (such as a temperature, a wind speed, a sweep mode, and a refrigeration mode), the air conditioner controls the operation of the air conditioner according to the received air conditioner control parameter information of the air conditioner sent by the edge computing device. Therefore, the operation mode of the air conditioner matches the clothing worn by the user within the preset distance range.

In the technical solutions of this embodiment of the present application, the base station is used as the receiving source to receive the preset information broadcast by the electronic tag on the preset object within the preset range of the electrical device. In this manner, there is no need to dispose a receiving source on the electrical device, and the simplification of the structure of the electrical device reduces the manufacturing cost of the electrical device to a great extent. Thus, information processing technology is applied in many fields. On this basis, the base station may send the received preset information to the edge computing device adjacent to the base station to make the edge computing device determine the operation parameter information of the electrical device according to the received preset information. Thus, the duration of the data transmission is shortened, and the security of the data transmission is improved. At this time, the electrical device may receive the at least one of the preset information sent by the edge computing device or the operation parameter information sent by the edge computing device and automatically control the operation of the electrical device based on the operation parameter information. In the preceding technical solutions, the information stored on the electronic tag on the preset object within the preset range of the electrical device is automatically acquired and processed. The acquisition and processing process is fast, safe, and completely free of user participation. Therefore, when user operation is simplified, the high-speed response and the privacy protection of data are ensured.

For a clearer understanding of the implementation process of each preceding step, there are several points that need to be described below.

First, in an implementation in which the edge computing device may determine the operation parameter information of the electrical device according to the received preset information, with regard to each electrical device, for example, the respective operation parameter information corresponding to different preset information associated with the each electrical device may be stored locally in the edge computing device. In this manner, the edge computing device can locally retrieve the operation parameter information matching the each electrical device according to the received preset information of the electrical device.

A washing machine is used as an example. The data processing flow of the edge computing device may be referred to FIG. 2. The clothing information broadcast by the electronic tag is received - the clothing information is analyzed to retrieve the matching washing mode and parameter - the washing mode and parameter are sent to the washing machine - if the washing mode and parameter are sent, the clothing information is stored locally; and if the washing mode and parameter are not sent, the washing mode and parameter are sent again - the washing mode and parameter are uploaded to the server. At this time, due to the short distance between the base station and the edge computing device, the edge computing device may perform local processing, local sending, and local storage of the clothing information. Thus, the data response speed is improved, and the risk of user privacy leakage is reduced. Moreover, data that does not involve privacy may also be uploaded to the server for subsequent big data analysis.

Second, since there may be a case where multiple electrical devices share one edge computing device, to distinguish which electrical device the preset information received by the edge computing device comes from, in an optional solution, the identification information of the electrical device may be sent to the electronic tag. In this manner, the preset information of the preset object and the identification information of the electrical device can be both stored in the electronic tag. Thus, the edge computing device may receive the preset information and the identification information at the same time. For example, a washing machine is used as an example. The electronic tag may associate the stored clothing information with the identification information of the washing machine and then broadcast the information. At this time, according to the received clothing information and identification information, the edge computing device may determine which washing machine the clothing information is located in or what clothing a certain washing machine has. Thus, the edge computing device can classify the clothing information according to the identification information. Each type of clothing information has the same identification information. That is, the same type of clothing information is located in the same washing machine. Then multiple pieces of clothing information in the same washing machine are sent to the washing machine corresponding to the identification information.

Third, the preset information stored in the electronic tag may be read by the tag receiver that is in the tag reader and is configured to receive the preset information broadcast by the electronic tag, that is, the receiving source. On this basis, it is considered that if an independent tag reader is disposed on the electrical device, or if a receiving source is disposed on each electrical device, the manufacturing cost of the electrical device is high. As a result, the electrical device is difficult to be applied in many fields. Thus, the base station may be directly used as the receiving source. When it is necessary to excite the electronic tag based on an emission source, the emission source is disposed on the electrical device. In this manner, multiple electrical devices may share one base station, to-be-disposed devices and apparatuses on the electrical device are reduced. Therefore, the manufacturing cost of the electrical device is reduced, and the information processing technology described in this embodiment of the present application is applied in many fields.

Fourth, the base station may be a fifth-generation (5G) base station or another base station, such as a 5G indoor micro base station. The base station may receive the preset information broadcast by the electronic tag by configuring a receiving frequency band. If it is considered that the transmission distance of the preset information broadcast by the electronic tag is limited, for example, the transmission distance may reach about one kilometer, the distance between the base station and the electrical device needs to satisfy the transmission distance of the electronic tag, or the base station has a preset distribution density. At this time, the electrical device may receive the at least one of the preset information sent by the edge computing device or the operation parameter information sent by the edge computing device through the communication unit in the electrical device. The communication unit may be a wireless fidelity (Wi-Fi) communication unit or a 2G, 3G, 4G, or 5G communication unit. The communication unit may communicate with the edge computing device through the base station in a network-connected manner. On this basis, if the communication unit includes a narrow band internet of things (NB-IoT) module, the communication unit has a function of exciting the emission source of the electronic tag.

Fifth, the preset object should be a preset object within the preset range of the electrical device. Since when the operation parameter information of the electrical device is determined according to the preset information, the preset information should be preset information closely related to the electrical device, such as preset information of the preset object within the preset range. Thus, the accuracy of the operation parameter information can be ensured. For example, a washing machine automatically identifies clothing. The washing parameter information of this washing machine should be related only to the clothing information in this washing machine. That is, the washing parameter information should be related only to the clothing in this washing machine. The washing parameter information is not related to clothing placed next to this washing machine or clothing in washing machines adjacent to this washing machine in the laundry room. Therefore, this washing machine needs to acquire the clothing information in this washing machine.

Sixth, the electronic tag generally does not have an internal power supply. The internal integrated circuit of the electronic tag is driven by receiving electromagnetic wave energy. That is, the electromagnetic wave energy may cause the electronic tag to generate an induced current. Then the electronic tag broadcasts the stored preset information. The electromagnetic wave may be an electromagnetic wave emitted by a surrounding Wi-Fi and a surrounding base station or may be an electromagnetic wave emitted by the emission source in the electrical device. The receiving source may be a tag sender of the tag reader. After the electronic tag receives the electromagnetic wave energy, the electronic tag may automatically send a data signal to surroundings in real time. The data signal may present the preset information.

Moreover, with reference to the fifth point, the excited electronic tag should be an electronic tag on the preset object within the preset range. A washing machine is used as an example. The range in which the emission source of this washing machine excites the electronic tag is limited to the clothing in this washing machine. The clothing placed next to this washing machine or the clothing in washing machines adjacent to this washing machine in the laundry room cannot be triggered. Therefore, it is necessary to strictly control the excitation range of the emission source. Alternatively, the excitation range of the emission source may not be strictly controlled; and after the clothing information is acquired, whether the clothing information belongs to the clothing in this washing machine is determined.

Optionally, on this basis, the preceding information processing method may further include controlling the emission source in the electrical device to start working to excite the electronic tag on the preset object to broadcast the stored preset information. If the electronic tag on the preset object is excited and broadcasts the stored preset information through the emission source disposed the electrical device, the control unit in the electrical device may first control the emission source to start working. Then, the working emission source excites the electronic tag on the preset object, and the electronic tag broadcasts the stored preset information. On this basis, to sufficiently excite the electronic tag on the preset object, optionally the electrical device may also be controlled to operate when the emission source in the electrical device is controlled to start working. In this manner, the preset object in the electrical device may also operate. Thus, the electronic tag on the preset object can be sufficiently excited. For example, the washing machine may control the washing bucket to rotate at a lower rotational speed. Thus, the clothing in the washing bucket can be excited by the emission source.

For example, the preceding emission source may include at least one of the communication unit or the tag sender. The tag sender may be configured to excite the electronic tag to broadcast the preset information. The communication unit having the NB-IoT module also has the function of exciting the emission source of the electronic tag. In an embodiment, the emission source for exciting the electronic tag may not be specially disposed in the electrical device. Instead, the electronic tag automatically receives the electromagnetic wave energy emitted by the surrounding Wi-Fi and the surrounding base station and converts the electromagnetic wave energy into its own energy. The energy is used to automatically broadcast and send the preset information to the surroundings in real time. Such an electronic tag may be referred to as a spontaneous tag.

Additionally, an identification mode may also be disposed in the electrical device. In the identification mode, the control unit may control the emission source to start working and control the electrical device to operate. Since the duration of the identification mode is fixed, the identification mode may be exited after a preset duration is reached. At this time, the control unit controls the emission source to stop working. The edge computing device determines the operation parameter information of the electrical device according to all the received preset information. For example, after the user puts the clothing into the washing bucket of the washing machine, the identification mode may be started. At this time, the emission source of the washing machine starts working. Then the electronic tag on the to-be-washed clothing in the washing machine may be excited to enable the electronic tag to broadcast the stored clothes information. After the preset duration is reached, the washing machine exits the identification mode. The edge computing device determines the washing parameter information of the washing machine according to all the received clothing information.

### Embodiment two

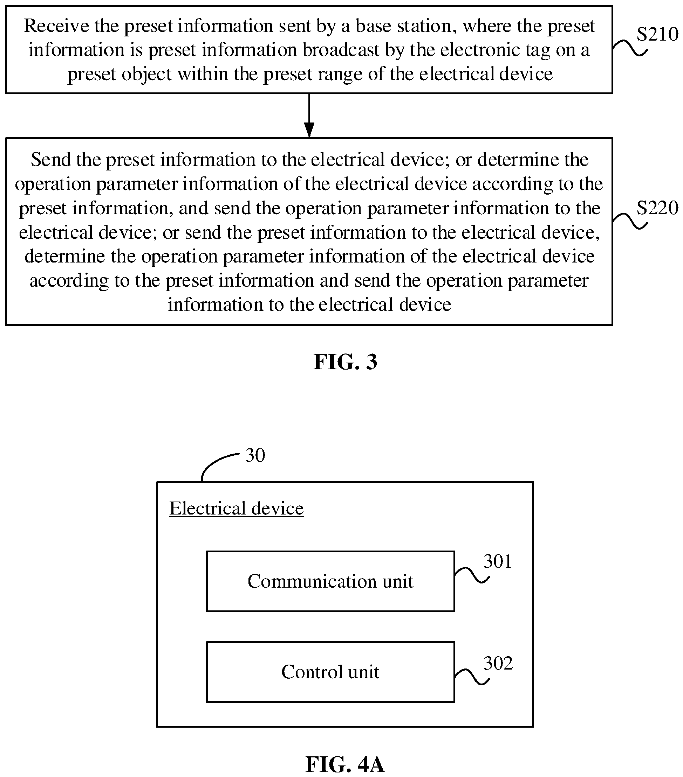

FIG. 3 is a flowchart of an information processing method according to embodiment two of the present application. This method may be applied to the edge computing device. This embodiment may be applied to a case where the preset information broadcast by the electronic tag on the preset object within the preset range of the electrical device sent by the base station is acquired and processed.

Referring to FIG. 3, the method of this embodiment may include the steps below.

In S210, the preset information sent by the base station is received. The preset information is preset information broadcast by the electronic tag on the preset object within the preset range of the electrical device.

The base station may receive the preset information broadcast by the electronic tag on the preset object within the preset range of the electrical device and send this preset information to the edge computing device. For example, the preset information may be received by the receiving source disposed in the base station. The receiving source may be the tag receiver of the tag reader. The electronic tag broadcasts the preset information after the electronic tag is excited by the emission source in the electrical device. This emission source may include at least one of the communication unit (such as a 5G communication unit) or the tag sender. The emission source for exciting the electronic tag may not be specially disposed in the electrical device. The electronic tag automatically receives the electromagnetic wave energy emitted by the surrounding Wi-Fi and the surrounding base station and converts the electromagnetic wave energy into its own energy. The energy is used to automatically broadcast and send the preset information to the surroundings in real time.

Generally, the distance between the base station and the edge computing device is relatively short. For example, the distance between the base station and the edge computing device may be less than a preset distance threshold. Alternatively, the edge computing device is integrated in the base station. On this basis, when the distance between the base station and the edge computing device is less than the preset distance threshold, the base station may be communicatively connected to the edge computing device in a wired manner. Thus, the duration of the data transmission is shortened, and the security of the data transmission is improved. Optionally, for the case where the base station is communicatively connected to the edge computing device in a wired manner, a set number of base stations may be communicatively connected to the edge computing device in a wired manner. Thus, each edge computing device can process the preset information in time and efficiently, and the data response speed is improved.

In S220, the preset information is sent to the electrical device. Alternatively, the operation parameter information of the electrical device is determined according to the preset information, and the operation parameter information is sent to the electrical device. Alternatively, the preset information is sent to the electrical device; and the operation parameter information of the electrical device is determined according to the preset information, and the operation parameter information is sent to the electrical device.

After the edge computing device receives the preset information, the edge computing device may perform at least one of the following operations: The preset information is directly sent to the electrical device to enable the electrical device to determine its own operation parameter information according to the received preset information; or the operation parameter information of the electrical device is directly determined according to the preset information, and the operation parameter information is sent to the electrical device. After the electrical device receives or determines the operation parameter information, the electrical device may control its own operation based on the operation parameter information.

On this basis, optionally, the edge computing device may also send the preset information to the terminal device to enable the terminal device to determine the operation parameter information of the electrical device according to the preset information and send the operation parameter information to the electrical device. Optionally, the edge computing device may encrypt the at least one of the preset information or the operation parameter information and then upload the at least one of the preset information or the operation parameter information to the server. Therefore, when user privacy is protected, the server can perform the big data analysis according to the at least one of the preset information or the operation parameter information.

In the technical solutions of this embodiment of the present application, with regard to the preset information sent by the base station and received by the edge computing device, the preset information is directly sent to the electrical device; or the operation parameter information determined according to the preset information is sent to the electrical device; or the preset information is directly sent to the electrical device, and the operation parameter information determined according to the preset information is sent to the electrical device. In this manner, the application of the edge computing device adjacent to the base station significantly improves the transmission speed and the transmission security of the data.

### Embodiment three

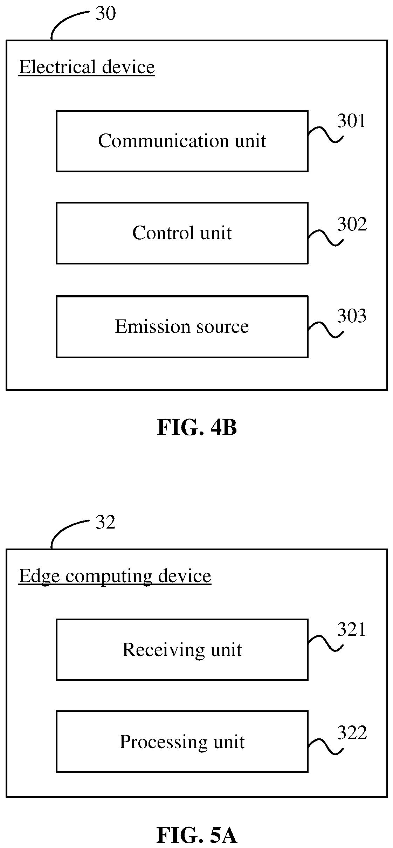

FIGS. 4A and 4B are diagrams of an electrical device according to embodiment three of the present application. This electrical device has the same concept as the information processing method of embodiment one. For details not described in detail in the embodiment of the electrical device, reference may be made to the related description in preceding embodiment one.

Referring to FIG. 4A, the electrical device 30 may include a communication unit 301 and a control unit 302. The communication unit 301 is configured to receive the at least one of the preset information sent by the edge computing device or the operation parameter information of the electrical device sent by the edge computing device. The preset information is preset information broadcast by the electronic tag on the preset object within the preset range of the electrical device. After the electronic tag broadcasts the preset information, the preset information is received by the base station and sent to the edge computing device by the base station. The operation parameter information is determined according to the preset information. The control unit 302 is configured to control the operation of the electrical device according to the at least one of the preset information or the operation parameter information.

Optionally, on this basis, referring to FIG. 4B, the electrical device 30 may further include an emission source 303.

The emission source 303 is configured to excite the electronic tag on the preset object to broadcast the stored preset information.

Accordingly, the control unit 302 is configured to control the emission source in the electrical device to start working to excite the electronic tag on the preset object to broadcast the stored preset information.

Optionally, the control unit 302 is further configured to control the electrical device to operate so that the emission source sufficiently excites the electronic tag on the preset object.

Optionally, the emission source 303 includes at least one of the communication unit or the tag sender.

Optionally, the operation parameter information received by the communication unit 301 is determined in the manner below.

The operation parameter information is determined by the edge computing device according to the preset information. Alternatively, the operation parameter is determined by the terminal device connected to the edge computing device according to the preset information received from the edge computing device.

Optionally, the electrical device is the washing machine. The preset object is the clothing. The preset information is the clothing information. The operation parameter information is the washing parameter information.

For the electrical device provided by embodiment three of the present application, the communication unit of the electrical device may receive the at least one of the preset information sent by the edge computing device or the operation parameter information sent by the edge computing device. Then, the communication unit of the electrical device may automatically control the operation of the electrical device according to the at least one of the preset information or the operation parameter information. In the preceding electrical device, the information stored on the electronic tag on the preset object within the preset range of the electrical device is automatically acquired and processed. The acquisition and processing process is fast, safe, and completely free of the user participation. Therefore, when the user operation is simplified, the high-speed response and the privacy protection of the data are ensured.

The electrical device provided by this embodiment of the present application may execute the information processing method provided by embodiment one of the present application and has functional modules and beneficial effects corresponding to the method executed.

In the embodiment of the electrical device, the hardware structure included is just divided according to functional logic, and the division is not limited to this, as long as corresponding functions can be achieved. Additionally, the name of the hardware structure is just intended for distinguishing and is not to limit the scope of the present application.

### Embodiment four

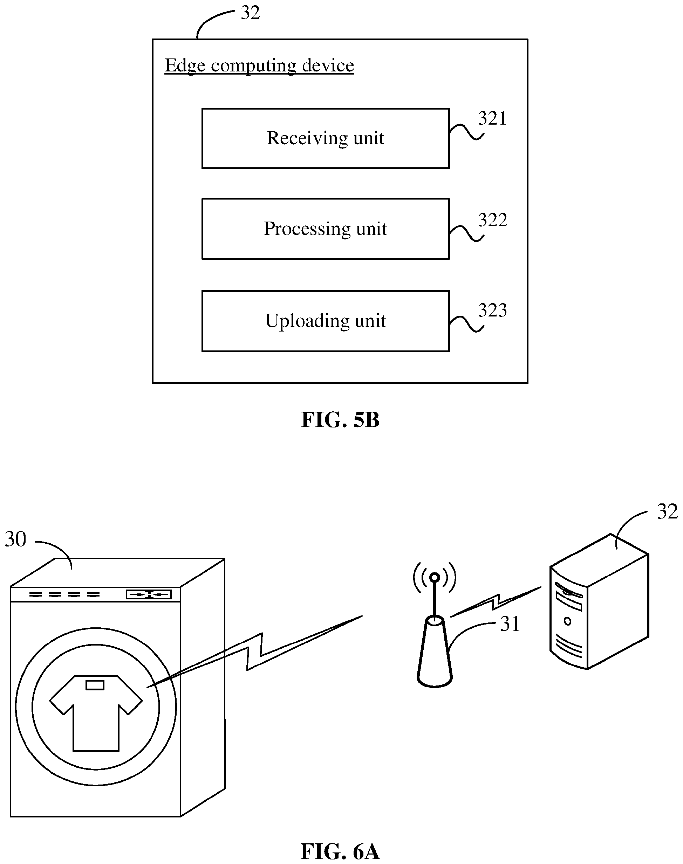

FIGS. 5A and 5B are diagrams of an edge computing device according to embodiment four of the present application. This edge computing device has the same concept as the information processing method of embodiment two. For details not described in detail in the embodiment of the edge computing device, reference may be made to the related description in preceding embodiment two.

Referring to FIG. 5A, this edge computing device 32 may include a receiving unit 321 and a processing unit 322. The receiving unit 321 is configured to receive the preset information sent by the base station. The preset information is preset information broadcast by the electronic tag on the preset object within the preset range of the electrical device. The processing unit 322 is configured to send the preset information to the electrical device; or determine the operation parameter information of the electrical device according to the preset information and send the operation parameter information to the electrical device; or send the preset information to the electrical device, determine the operation parameter information of the electrical device according to the preset information and send the operation parameter information to the electrical device.

Optionally, on this basis, this processing unit 322 is further configured to send the preset information to the terminal device. Thus, after the terminal device determines the operation parameter information of the electrical device according to the preset information, the operation parameter information is sent to the electrical device.

Optionally, on this basis, referring to FIG. 5B, the edge computing device 32 may further include an uploading unit 323. The uploading unit 323 is configured to encrypt the at least one of the preset information or the operation parameter information and then upload the at least one of the preset information or the operation parameter information to the server.

Optionally, the distance between the base station and the edge computing device 32 is less than the preset distance threshold. Alternatively, the edge computing device 32 is integrated in the base station.

Optionally, when the distance between the base station and the edge computing device 32 is less than the preset distance threshold, the base station is communicatively connected to the edge computing device 32 in a wired manner.

Optionally, on this basis, that the base station 32 is communicatively connected to the edge computing device in a wired manner may include communicatively connecting a set number of base stations to the edge computing device 32 in a wired manner.

For the edge computing device provided by embodiment four of the present application, the receiving unit in the edge computing device may receive the preset information sent by the base station. Then, the processing unit in the edge computing device may send the preset information to the electrical device; or determine the operation parameter information of the electrical device according to the preset information and send the operation parameter information to the electrical device; or send the preset information to the electrical device, determine the operation parameter information of the electrical device according to the preset information and send the operation parameter information to the electrical device. Since the preceding edge computing device is relatively adjacent to the base station, the edge computing device may acquire and process the preset information sent by the base station in time. Thus, high-speed and secure data transmission is achieved.

The edge computing device provided by this embodiment of the present application may execute the information processing method provided by embodiment two of the present application and has functional modules and beneficial effects corresponding to the method executed.

In the embodiment of the edge computing device, the hardware structure included is just divided according to functional logic, and the division is not limited to this, as long as corresponding functions can be achieved. Additionally, the name of the hardware structure is just intended for distinguishing and is not to limit the scope of the present application.

### Embodiment five

FIGS. 6A to 6C are architecture diagrams of an information processing system according to embodiment five of the present application. As shown in FIG. 6A, this information processing system may include an electrical device 30, a base station 31, and an edge computing device 32.

The base station 31 is configured to receive the preset information broadcast by the electronic tag on the preset object within the preset range of the electrical device and send the received preset information to the edge computing device.

The edge computing device 32 is configured to send the preset information to the electrical device; or determine the operation parameter information of the electrical device according to the received preset information and send the operation parameter information to the electrical device; or send the preset information to the electrical device, determine the operation parameter information of the electrical device according to the received preset information and send the operation parameter information to the electrical device.

The electrical device 30 is configured to control the operation of the electrical device according to the at least one of the received preset information or the received operation parameter information.

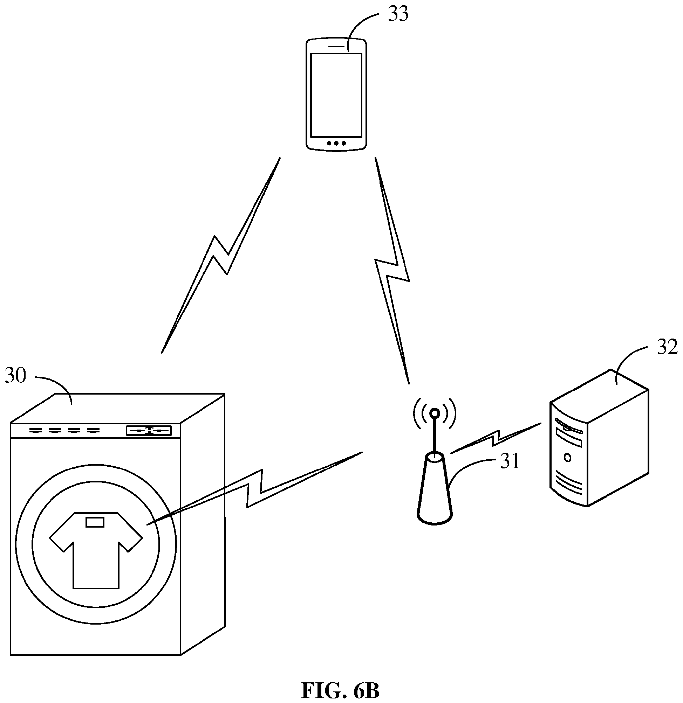

On this basis, optionally, referring to FIG. 6B, this information processing system may further include a terminal device 33. Accordingly, this edge computing device 32 may further be configured to send the received preset information to the terminal device.

Accordingly, this terminal device 33 may be configured to receive the preset information sent by the edge computing device, determine the operation parameter information of the electrical device according to the received preset information, and send the operation parameter information to the electrical device.

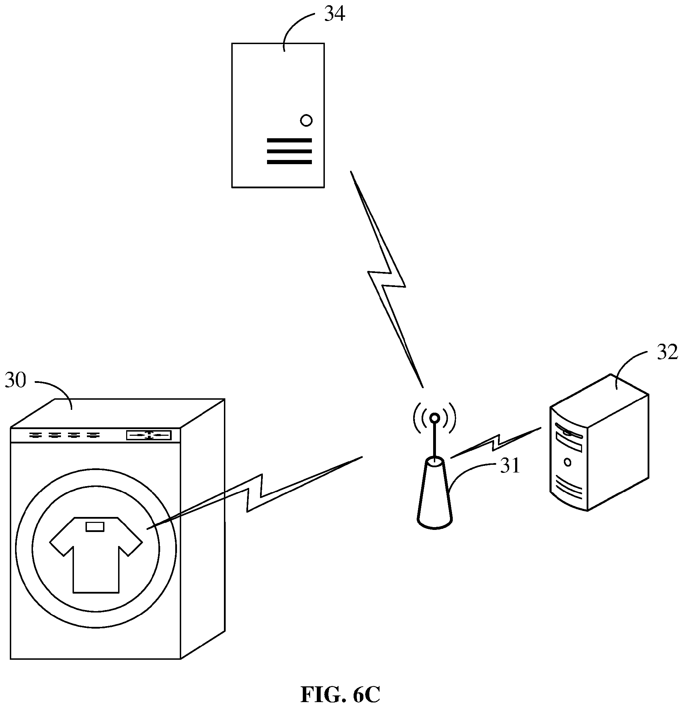

On this basis, optionally, referring to FIG. 6C, this information processing system may further include a server 34. Accordingly, the edge computing device 32 may further be configured to encrypt the at least one of the preset information or the operation parameter information and then upload the at least one of the preset information or the operation parameter information to the server.

The information processing system provided by embodiment five of the present application may execute the information processing method provided by any embodiment of the present application and has functional modules and beneficial effects corresponding to the method executed. The specific content may refer to the preceding embodiments, and the details are not repeated here.

## Claims

1. An information processing method, the method being applied to an electrical device (30) and comprising:
controlling an emission source (303) in the electrical device (30) to start working to excite the electronic tag on the preset object to broadcast stored preset information;
receiving at least one of preset information sent by an edge computing device (32) or operation parameter information of the electrical device (30) sent by the edge computing device (32); and
controlling operation of the electrical device (30) according to the at least one of the preset information or the operation parameter information,
wherein the preset information is preset information broadcast by an electronic tag on a preset object within a preset radio-frequency range of the electrical device (30), and after the electronic tag broadcasts the preset information, the preset information is received by a base station (31) and sent to the edge computing device (32) by the base station (31); and the operation parameter information is determined, by the edge computing device (32), according to the preset information;
wherein the edge computing device (32) is directly integrated in the base station (31).

2. The method according to claim 1, when controlling the emission source (303) in the electrical device (30) to start working to excite the electronic tag on the preset object to broadcast the stored preset information, the method further comprising:
controlling the electrical device (30) to operate so that the emission source (303) sufficiently excites the electronic tag on the preset object.

3. The method according to claim 1, wherein the emission source (303) comprises at least one of a communication unit or a tag sender.

4. The method according to claim 1, wherein the operation parameter information is determined according to the preset information in the following manner:
the operation parameter information is determined by the edge computing device (32) according to the preset information, or the operation parameter information is determined by a terminal device connected to the edge computing device (32) according to the preset information received from the edge computing device (32).

5. The method according to any one of claims 1 to 4, wherein the electrical device (30) is a washing machine, the preset object is clothing, the preset information is clothing information, and the operation parameter information is washing parameter information.

6. An information processing system, comprising:
a base station (31), an edge computing device (32), and an electrical device (30);
the base station (31) configured to receive preset information broadcast by an electronic tag on a preset object within a preset radio-frequency range of the electrical device (30) and send the received preset information to the edge computing device (32);
the edge computing device (32) configured to perform at least one of the following operations:
sending the preset information to the electrical device (30); or determining operation parameter information of the electrical device (30) according to the received preset information and sending the operation parameter information to the electrical device (30); and
the electrical device (30) configured to control operation of the electrical device (30) according to at least one of the received preset information or the received operation parameter information;
wherein the edge computing device (32) is directly integrated in the base station (31).

## Patentansprüche

1. Informationsverarbeitungsverfahren, das auf ein elektrisches Gerät (30) angewendet wird und Folgendes umfasst:
Steuern einer Emissionsquelle (303) in dem elektrischen Gerät (30), um mit der Arbeit zu beginnen und das elektronische Etikett auf dem voreingestellten Objekt anzuregen, gespeicherte voreingestellte Informationen zu senden;
Empfangen von mindestens einer von voreingestellten Informationen, die von einer Edge-Computing-Einrichtung (32) gesendet werden, oder von Betriebsparameterinformationen des elektrischen Geräts (30), die von der Edge-Computing-Einrichtung (32) gesendet werden; und
Steuern des Betriebs des elektrischen Geräts (30) gemäß mindestens einer der voreingestellten Informationen oder der Betriebsparameterinformationen,
wobei die voreingestellten Informationen voreingestellte Informationen sind, die von einem elektronischen Etikett auf einem voreingestellten Objekt innerhalb eines voreingestellten Hochfrequenzbereichs des elektrischen Geräts (30) gesendet werden, und nachdem das elektronische Etikett die voreingestellten Informationen gesendet hat, die voreingestellten Informationen von einer Basisstation (31) empfangen und von der Basisstation (31) an die Edge-Computing-Einrichtung (32) gesendet werden; wobei die Betriebsparameterinformationen von der Edge-Computing-Einrichtung (32) gemäß den voreingestellten Informationen bestimmt werden;
wobei die Edge-Computing-Einrichtung (32) direkt in die Basisstation (31) integriert ist.

2. Verfahren nach Anspruch 1, wobei beim Steuern der Emissionsquelle (303) in dem elektrischen Gerät (30), um mit der Arbeit zu beginnen und das elektronische Etikett auf dem voreingestellten Objekt anzuregen, die gespeicherten voreingestellten Informationen zu senden, das Verfahren weiterhin Folgendes umfasst:
Steuern des elektrischen Geräts (30), um zu bewirken, dass die Emissionsquelle (303) das elektronische Etikett auf dem voreingestellten Objekt ausreichend anregt.

3. Verfahren nach Anspruch 1, wobei die Emissionsquelle (303) mindestens eines der Bauteile Kommunikationseinheit und Etikett-Sender umfasst.

4. Verfahren nach Anspruch 1, wobei die Betriebsparameterinformationen gemäß den voreingestellten Informationen auf folgende Weise bestimmt werden:
die Betriebsparameterinformationen werden von der Edge-Computing-Einrichtung (32) gemäß den voreingestellten Informationen bestimmt, oder die Betriebsparameterinformationen werden von einem mit der Edge-Computing-Einrichtung (32) verbundenen Endgerät gemäß den von der Edge-Computing-Einrichtung (32) empfangenen voreingestellten Informationen bestimmt.

5. Verfahren nach einem der Ansprüche 1 bis 4, wobei das elektrische Gerät (30) eine Waschmaschine ist, wobei das voreingestellte Objekt Kleidung ist, wobei die voreingestellten Informationen Kleidungsinformationen sind, und wobei die Betriebsparameterinformationen Waschparameterinformationen sind.

6. Informationsverarbeitungssystem, umfassend:
eine Basisstation (31), eine Edge-Computing-Einrichtung (32) und ein elektrisches Gerät (30);
wobei die Basisstation (31) konfiguriert ist, um voreingestellte Informationen zu empfangen, die von einem elektronischen Etikett auf einem voreingestellten Objekt innerhalb eines voreingestellten Hochfrequenzbereichs des elektrischen Geräts (30) gesendet werden, und die empfangenen voreingestellten Informationen an die Edge-Computing-Einrichtung (32) zu senden;
wobei die Edge-Computing-Einrichtung (32) konfiguriert ist, um mindestens eine der folgenden Operationen durchzuführen: Senden der voreingestellten Informationen an das elektrische Gerät (30); oder Bestimmen von Betriebsparameterinformationen des elektrischen Geräts (30) gemäß den empfangenen voreingestellten Informationen und Senden der Betriebsparameterinformationen an das elektrische Gerät (30); und
wobei das elektrische Gerät (30) konfiguriert ist, um den Betrieb des elektrischen Geräts (30) gemäß mindestens einer der empfangenen voreingestellten Informationen oder der empfangenen Betriebsparameterinformationen zu steuern;
wobei die Edge-Computing-Einrichtung (32) direkt in die Basisstation (31) integriert ist.

## Revendications

1. Procédé de traitement d'informations, le procédé étant applicable à un dispositif électrique (30) et comprenant :
commander une source d'émission (303) du dispositif électrique (30) à se mettre en fonctionnement pour exciter une étiquette électronique sur un objet prédéfini afin de diffuser des informations prédéfinies stockées ;
recevoir au moins une des informations prédéfinies envoyées par un dispositif informatique périphérique (32) ou des informations de paramètre de fonctionnement du dispositif électrique (30) envoyées par le dispositif informatique périphérique (32) ; et
commander un fonctionnement du dispositif électrique (30) en fonction de l'au moins une des informations de paramètre de fonctionnement,
dans lequel les informations prédéfinies sont des informations prédéfinies diffusées par une étiquette électronique sur un objet prédéfini dans une plage prédéfinie de fréquences radioélectriques du dispositif électrique (30), et une fois que l'étiquette électronique a diffusé les informations prédéfinies, les informations prédéfinies sont reçues par une station de base (31) et envoyées vers le dispositif informatique périphérique (32) par la station de base (31) ; et les informations de paramètre de fonctionnement sont déterminées, par le dispositif informatique périphérique (32), en fonction des informations prédéfinies ;
dans lequel le dispositif informatique périphérique (32) est directement intégré dans la station de base (31).

2. Procédé selon la revendication 1, lors de commander la source d'émission (303) du dispositif électrique (30) à se mettre en fonctionnement pour exciter l'étiquette électronique sur l'objet prédéfini afin de diffuser les informations prédéfinies stockées, le procédé comprenant en outre :
commander le dispositif électrique (30) à fonctionner de sorte que la source d'émission (303) excite suffisamment l'étiquette électronique sur l'objet prédéfini.

3. Procédé selon la revendication 1, dans lequel la source d'émission (303) comprend au moins une d'une unité de communication et d'un émetteur d'étiquettes.

4. Procédé selon la revendication 1, dans lequel les informations de paramètre de fonctionnement sont déterminées en fonction des informations prédéfinies de la manière suivante :
les informations de paramètre de fonctionnement sont déterminées par le dispositif informatique périphérique (32) en fonction des informations prédéfinies, ou les informations de paramètre de fonctionnement sont déterminées par un dispositif terminal connecté au dispositif informatique périphérique (32) en fonction des informations prédéfinies reçues à partir du dispositif informatique périphérique (32).

5. Procédé selon l'une quelconque des revendications 1 à 4, dans lequel le dispositif électrique (30) est une machine à laver, l'objet prédéfini est un vêtement, les informations prédéfinies sont des informations de vêtement et les informations de paramètre de fonctionnement sont des informations de paramètre de lavage.

6. Système de traitement d'informations, comprenant :
une station de base (31), un dispositif informatique périphérique (32) et un dispositif électrique (30) ;
la station de base (31) configurée pour recevoir des informations prédéfinies diffusées par une étiquette électronique sur un objet prédéfini dans une plage prédéfinie de fréquences radioélectriques du dispositif électrique (30), et pour envoyer les informations prédéfinies reçues vers le dispositif informatique périphérique (32) ;
le dispositif informatique périphérique (32) configuré pour effectuer au moins l'une des opérations suivantes : envoyer les informations prédéfinies vers le dispositif électrique (30) ; ou déterminer des informations de paramètre de fonctionnement du dispositif électrique (30) en fonction des informations prédéfinies reçues et envoyer les informations de paramètre de fonctionnement vers le dispositif électrique (30) ; et
le dispositif électrique (30) configuré pour commander le fonctionnement du dispositif électrique (30) en fonction d'au moins une des informations prédéfinies reçues ou des informations de paramètre de fonctionnement reçues ;
dans lequel le dispositif informatique périphérique (32) est directement intégré dans la station de base (31).
